# EUROPEAN PATENT APPLICATION

(11) **EP 1 981 014 A1**
(43) Date of publication of application: **15.10.2008**
(21) Application number: 07007517.1
(22) Date of filing: 12.04.2007
(51) Int. Cl.: G09B 5/06, G06F 15/02

(54) **Electronic book with multimedia play function**

(71) Applicant: Data Image Corporation, Nan-Kang Taipei 115 (TW)
(72) Inventor: Yu, Szu-Ping, Nan-Kang District Taipei 115 (TW)
(74) Representative: Muttock, Neil John

(57) **Abstract**

An electronic book (100, 100a, 100b) with multimedia play function includes a main body (1) and an AV play unit (2). The main body (1) includes a back cover (11), a front cover (12), a display, and a plurality of movable leaves (13a, 13b, 13c..., 13n) located between the back and the front cover (12). The display (14) is located at a predetermined position on an upper side (111) of the back cover (11), and each of the movable leaves (13a, 13b, 13c..., 13n) has a window (15a, 15b, 15c..., 15n, 8) formed at a position corresponding to the display (14). The AV play unit (2) includes a microprocessor (21), a built-in AV data memory (22), a display interface (141), a sound interface (161a), and a leaf detecting unit (23), which is connected to the microprocessor (21) for detecting each individual one of the movable leaves (13a, 13b, 13c..., 13n).

## Description

### FIELD OF THE INVENTION

The present invention relates to an electronic book, and more particularly to an electronic book with multimedia play function that includes a display to enable lively and changeful teaching, as well as interaction between a reader and the electronic book to achieve effective learning.

### BACKGROUND OF THE INVENTION

According to some investigations conducted in the modem society, most families have no more than two children in average, allowing most parents to pay more attention to the education of children. However, most of the currently available children books have contents that are not good enough in terms of teaching material. Books for preschool children of 0~4 years old have generally similar contents and are featured in beautiful printing without significant benefits to children. Such well printed children books are also expensive to increase the parents' burden. With the growth of children, the parents have to constantly purchase new books to obtain new teaching material suitable for the gradually growing children. The old books can not be repeatedly used but have to be discarded to form unnecessary waste in money.

As a resolution, there is developed teaching software for use on a computer or with an electronic book, so that children may be attracted by interactive, lively, and changeful material to learn via the computer teaching software or electronic book.

However, the currently developed electronic books for children are less helpful in interaction between children and parents, and lack interactive AV (audio-visual) teaching material. Generally speaking, most currently available electronic books for children fail to provide substantial and meaningful contents, particularly when preschool children of 0~4 years old are concerned.

Moreover, the currently available learning software or electronic books have the potential problem of electromagnetic wave, and are not suitable for excessive use by children.

### SUMMARY OF THE INVENTION

It is therefore a primary object of the present invention to provide an electronic book with multimedia play function, so that teaching and learning are no longer restricted to the use of a flat and monotonous book, and children books are more interesting and attractive for reading.

Another object of the present invention is to provide an interactive electronic book, which includes a display to enable interactive, lively, and changeful teaching and learning.

A further object of the present invention is to provide a repeatedly usable electronic book, which includes a display provided on a removable and replaceable base, so that the teaching contents of the electronic book may be freely changed depending on actual needs simply by replacing the removable base without the need of purchasing a new electronic book. The cost for buying electronic book can therefore be reduced.

To achieve the above objects, in accordance with the present invention, there is provided an electronic book with multimedia play function, which comprises a main body and an AV play unit. The main body includes a back cover, a front cover, a display, and a plurality of movable leaves located between the back and the front cover. The display is located at a predetermined position on an upper side of the back cover, and each of the movable leaves has a window formed at a position corresponding to the display. The AV play unit includes a microprocessor, a built-in AV data memory, a display interface, a sound interface, and a leaf detecting unit, which is connected to the microprocessor for detecting each individual one of the movable leaves.

With the technical means adopted by the present invention, electronic books are highly readable and attractive, and consumers may utilize changeful AV data displayed on the electronic books to achieve interactive and diversified teaching and learning. Moreover, the electronic book of the present invention is very easy to operate, and can therefore draw the attention of preschool children of 0~4 years old to achieve the purpose of learning. The present invention protects users against injury by electromagnetic wave from the commercially available computer teaching software or conventional electronic books. The present invention enables the use of a display mounted on a replaceable base and the update of AV data stored in the electronic book, so that the electronic book is repeatedly usable to effectively reduce the cost for constantly buying completely new electronic books.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein:
Fig. 1 is an exploded perspective view of an electronic book with multimedia play function according to a first embodiment of the present invention;
Fig. 2 is an assembled view of the electronic book of Fig. 1;
Fig. 3 is a sectional view taken along line 3-3 of Fig. 2;
Fig. 4 is a perspective view of the electronic book of Fig. 2 in an opened state;
Fig. 5 is a plan view showing arrangements on a base board included in the electronic book according to the first embodiment of the present invention;
Fig. 6 is a block diagram showing the control circuits of an AV play unit of the electronic book of the present invention;
Fig. 7 is a diagram showing the correspondence between the movable leaves of the electronic book of the present invention and AV data stored in the AV play unit;
Fig. 8 is an exploded perspective view of an electronic book with multimedia play function according to a second embodiment of the present invention;
Fig. 9 is a perspective view of an electronic book with multimedia play function according to a third embodiment of the present invention with the electronic book in an opened state; and
Fig. 10 shows a removable base included in the third embodiment of the present invention is separated from a back cover of the electronic book.

### DETAILED DESCRIPTION OF THE PREFERRED EMBODIMENTS

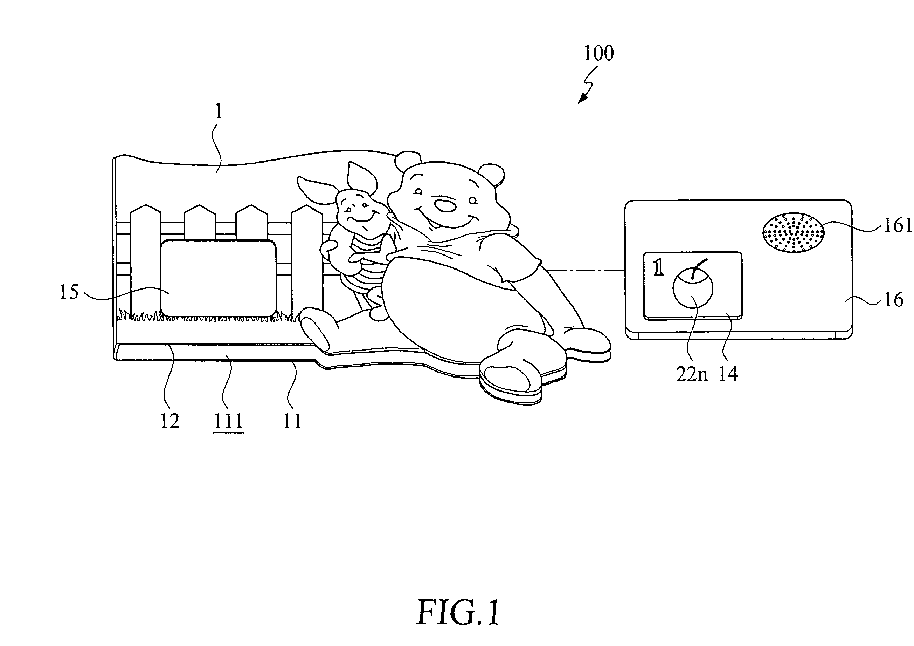

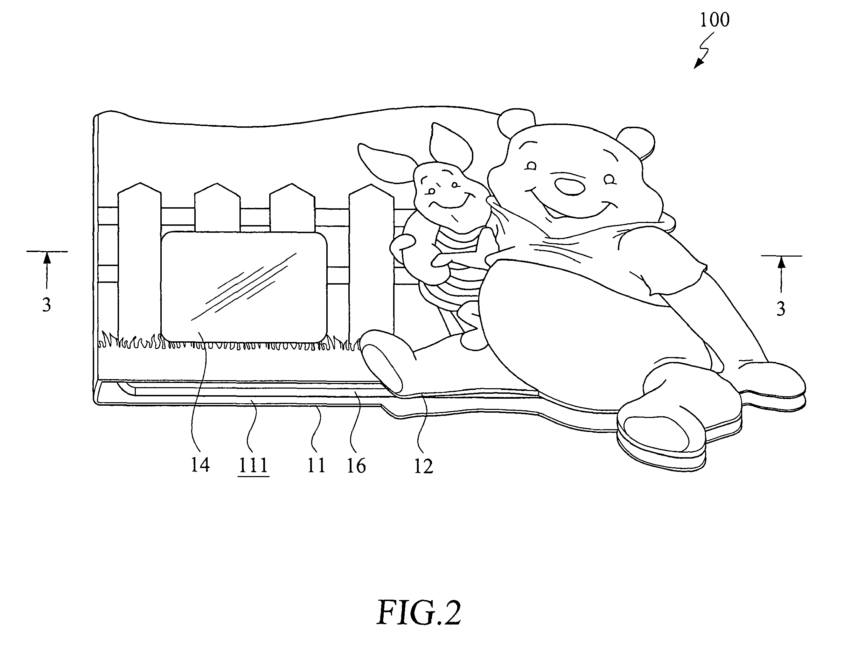

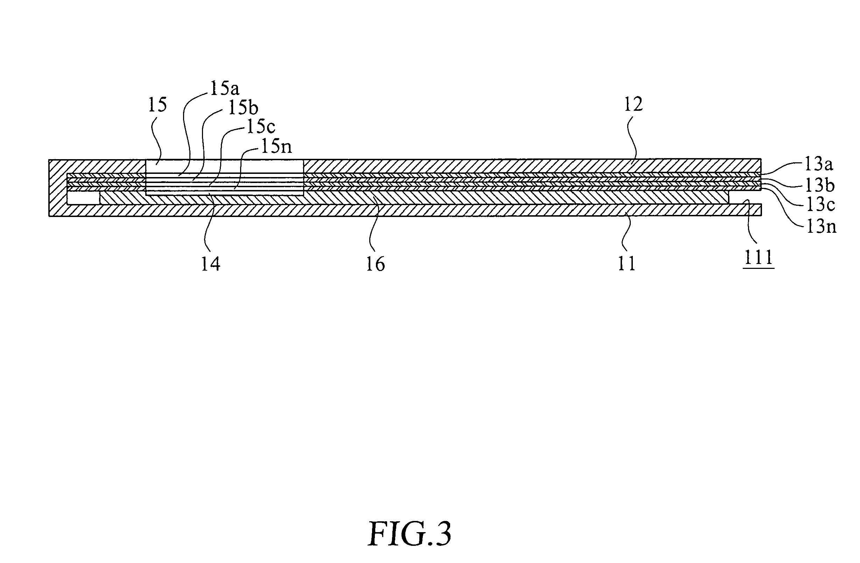

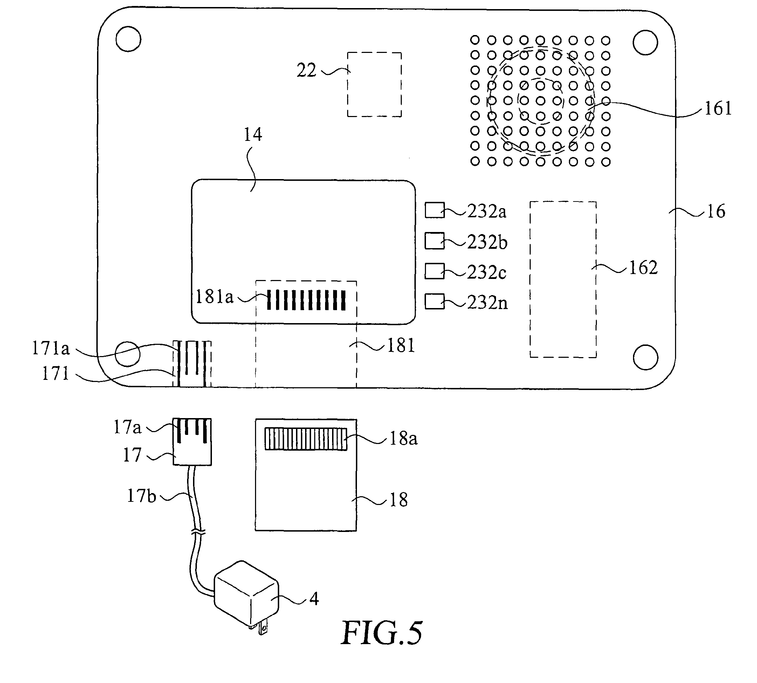

Please refer to Figs. 1 to 5. Fig. 1 shows an exploded perspective view of an electronic book with multimedia play function according to a first embodiment of the present invention. Figs. 2 to 4 respectively show the assembled view, sectional view and perspective view of the electronic book of Fig. 2 and Fig. 5 is a plan view showing arrangements on a base board included in the electronic book.

An electronic book with multimedia play function 100 according to a first embodiment of the present invention includes a main body 1 and an AV play unit 2. For the purpose of conciseness, the electronic book with multimedia play function according to the present invention is also briefly referred to as the electronic book herein.

As shown, the main body 1 of the electronic book 100 includes a back cover 11, a front cover 12, and a plurality of movable leaves 13a, 13b, 13c..., 13n.

The back cover 11 is located at a bottom of the main body 1 and includes an upper side 111. A base board 16 is located at a predetermined position on the upper side 111, and is provided at a predetermined position with a display 14 for playing AV data 22n. The front cover 12 is located at a top of the main body 1 and has an area corresponding to the display 14 being cut away to form a window 15, such that the display 14 is aligned with and located within an area defined by the window 15. The movable leaves 13a, 13b, 13c..., 13n are located between the back cover 11 and the front cover 12, and individually include a window 15a, 15b, 15c..., 15n corresponding to the display 14, so that the display 14 is aligned with and located within an area defined by the windows 15a, 15b, 15c..., 15n.

When a reader looks at the main body 1 before opening the electronic book 100, the display 14 is aligned with and located in the window 15 on the front cover 12. When the reader opens the electronic book 100 and reads the first movable leaf 13a, AV data 22n correspondingly shown on the display 14 can still be played and watched via the windows 15a. When the reader sequentially turns to the following leaves 13b, 13c..., 13n, corresponding AV data 22n are shown on the display 14 via the windows 15b, 15c..., 15n. That is, the reader can always watch corresponding AV data 22n whenever he or she turns to any one of the movable leaves 13a, 13b, 13c..., 13n.

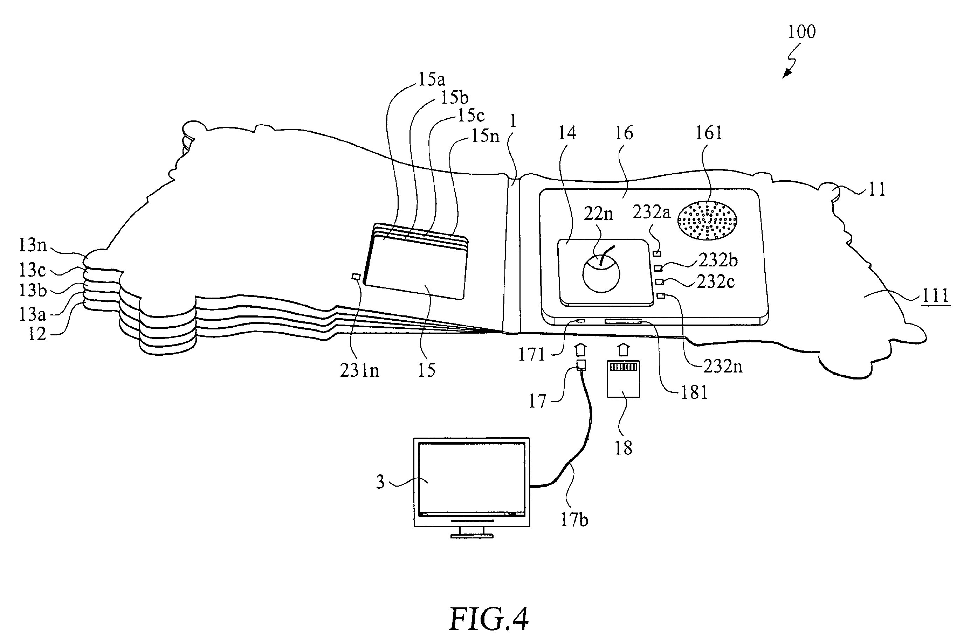

Please refer to Fig. 4. The movable leaves 13a, 13b, 13c..., 13n are individually provided at a predetermined position with a magnetic element 231a, 231b, 231c..., 231n; and the base board 16 on the upper side 111 of the back cover 11 is provided with a plurality of magnetic-sensing elements 232a, 232b, 232c..., 232n independently corresponding to the magnetic elements 231a, 231b, 231c..., 231n. Whereby, when the movable leaves 13a, 13b, 13c..., 13n are turned over one by one, the magnetic elements 231a, 231b, 231c..., 231n on the movable leaves independently induce the magnetic-sensing elements 232a, 232b, 232c..., 232n on the base board 16, so that the base board 16 is magnetically actuated and corresponding AV data 22n stored in the AV play unit 2 is played on the display 14.

The base board 16 is also provided at another predetermined position with a USB (universal serial bus) socket 171 for a USB male connector 17 to insert thereinto. The USB male connector 17 is connected at another end to a cable 17b, which is further connected to a computer 3 to enable data transmission between the computer 3 and the base board 16, so as to provide other AV data for playing on the display 14, and enable supply of working power to the base board 16.

Please refer to Fig. 5. In addition to the USB socket 171, a speaker 161, a battery 162, a card slot 181, and built-in AV data memory 22 are further provided at predetermined positions in the base board 16. The speaker 161 cooperates with the display 14 to play music corresponding to the AV data 22n played on the display 14, so as to increase the readability of the electronic book 100. The battery 162 supplies working voltage needed by control circuits on the base board 16.

The USB socket 171 and the USB male connector 17 include four contacts 171a and 17a, respectively. When the USB male connector 17 is inserted into the USB socket 171, the contacts 171a are in contact with the contacts 17a. When the battery 162 in the base board 16 is low in power, the cable 17b connected to the USB male connector 17 may be otherwise connected to a power supply adapter 4 to charge the battery 162.

A memory card 18 having a plurality of AV data stored thereon may be inserted into the card slot 181. The memory card 18 and the card slot 181 have contacts 18a and 181a, respectively. When the memory card 18 is inserted in the card slot 181, the contacts 18a are in contact with the contacts 181a, so that AV data stored on the memory card 18 may be played on the display 14.

The built-in AV data memory 22 stores a plurality of AV data thereon. When the movable leaves 13a, 13b, 13c..., 13n of the electronic book 100 are turned, the AV data stored in the built-in AV data memory 22 corresponding to each of the movable leaves 13a, 13b, 13c..., 13n are shown on the display 14 for viewing by the reader.

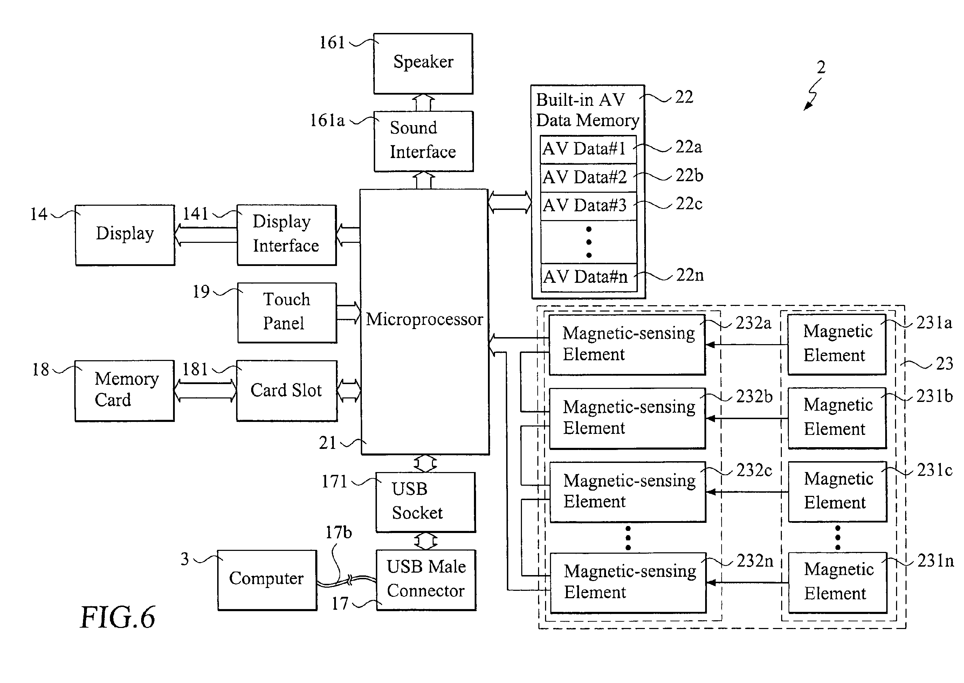

Fig. 6 is a block diagram showing the structure of the AV play unit 2 and the connection thereof to other parts of the electronic book 100. As shown, the AV play unit 2 includes a microprocessor 21, which is connected to the built-in AV data memory 22, and a leaf detecting unit 23. The microprocessor 21 is further connected to the display 14 via a display interface 141, to the speaker 161 via a sound interface 161 a, to the USB male connector 17 via the USB socket 171, and to the memory card 18 via the card slot 181. The microprocessor 21 may also be connected to a touch panel 19.

The built-in AV data memory 22 has multiple AV data 22a, 22b, 22c..., 22n stored thereon. The leaf detecting unit 23 includes a plurality of magnetic elements 231a, 231b, 231c..., 231n, and a plurality of corresponding magnetic-sensing elements 232a, 232b, 232c..., 232n. When the magnetic elements 231a, 231b, 231c..., 231n independently magnetically induce the magnetic-sensing elements 232a, 232b, 232c..., 232n, the latter independently transmit a message to the microprocessor 21, so that the microprocessor 21 automatically searches the built-in AV data memory 22 for one matched AV data 22a, 22b, 22c..., 22n, and the matched AV data is retrieved and transmitted to the display 14 via the display interface 141, and to the speaker 161 via the sound interface 161a, so that image and sound data corresponding to the leaf being viewed are synchronously played.

When the microprocessor 21 is connected to the USB male connector 17 via the USB socket 171, and the USB male connector 17 is further connected to the computer 3 via the cable 17b, data may be transmitted between the microprocessor 21 and the computer 3. Therefore, different AV data may be provided from the computer 3 to the built-in AV data memory 22 to update the contents or change the readability of the AV data 22a, 22b, 22c..., 22n stored in the AV data memory 22.

When the memory card 18 is inserted into the card slot 181 to thereby connect to the microprocessor 21, AV data may also be provided from the memory card 18 to the built-in AV data memory 22 via the microprocessor 21. Moreover, the computer 3 may also read data from or write data into the memory card 18 via the data transmission between the microprocessor 21 and the memory card 18.

When the microprocessor 21 is connected to a touch panel 19, the reader may select desired AV data 22a, 22b, 22c..., 22n simply by touching the touch panel 19, and can therefore watch the AV data at discretion.

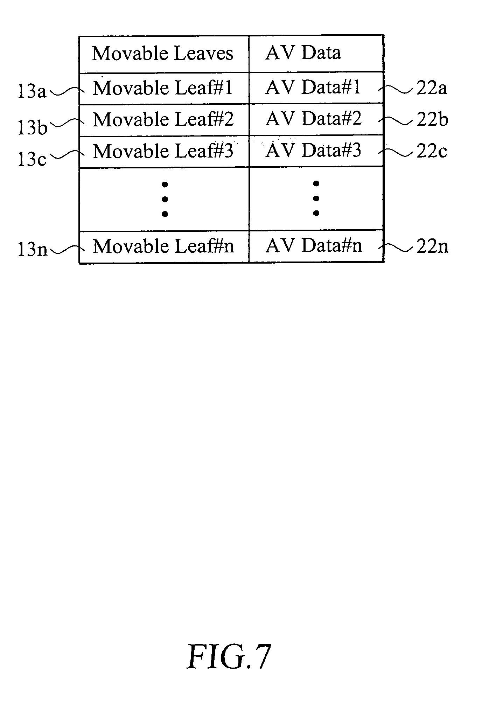

Fig. 7 is a diagram showing the correspondence between the movable leaves of the electronic book 100 and the AV data stored in the built-in AV data memory 22. As shown, the AV data 22a, 22b, 22c..., 22n have contents respectively correspond to the movable leaves 13a, 13b, 13c..., 13n. And, the movable leaves 13a, 13b, 13c..., 13n are printed with rich images, pictures, or texts that have relation with the contents of the AV data 22a, 22b, 22c..., 22n. The reader may interact with the electronic book 100 through the movable leaves13a, 13b, 13c..., 13n and the corresponding AV data 22a, 22b, 22c..., 22n, as well as the images, pictures, or texts printed on the movable leaves 13a, 13b, 13c..., 13n. Therefore, the electronic book 100 is more interesting to read and able to attract more readers, helping readers to assimilate knowledge taught by the electronic book 100.

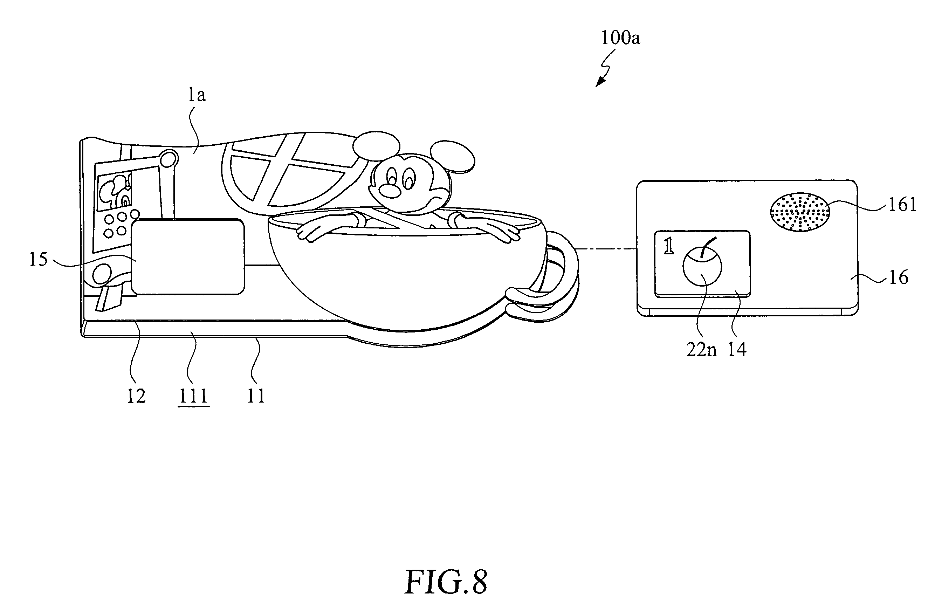

Fig. 8 is an exploded perspective view showing an electronic book 100a according to a second embodiment of the present invention. In the second embodiment, the base board 16 is movable, and can be removed and replaced with another one to give the same one electronic book 100a changeable subjects, and allows parents to buy children books at reduced cost. By changing the base board 16, the electronic book 100a may display AV data 22n of different contents and levels of readability in response to children's growth and learning ability. In the second embodiment, the base board 16 for the electronic book 100a is removable and repeatedly usable to largely save the cost for purchasing a lot of electronic books with an unchangeable base board.

The removable base board 16 in the second embodiment is portable and can therefore be used independently in a wide range of teaching environments depending on actual needs and different teaching targets. The removable base board 16 is also provided with a speaker 161 that makes teaching and learning more interesting to attract children's attention.

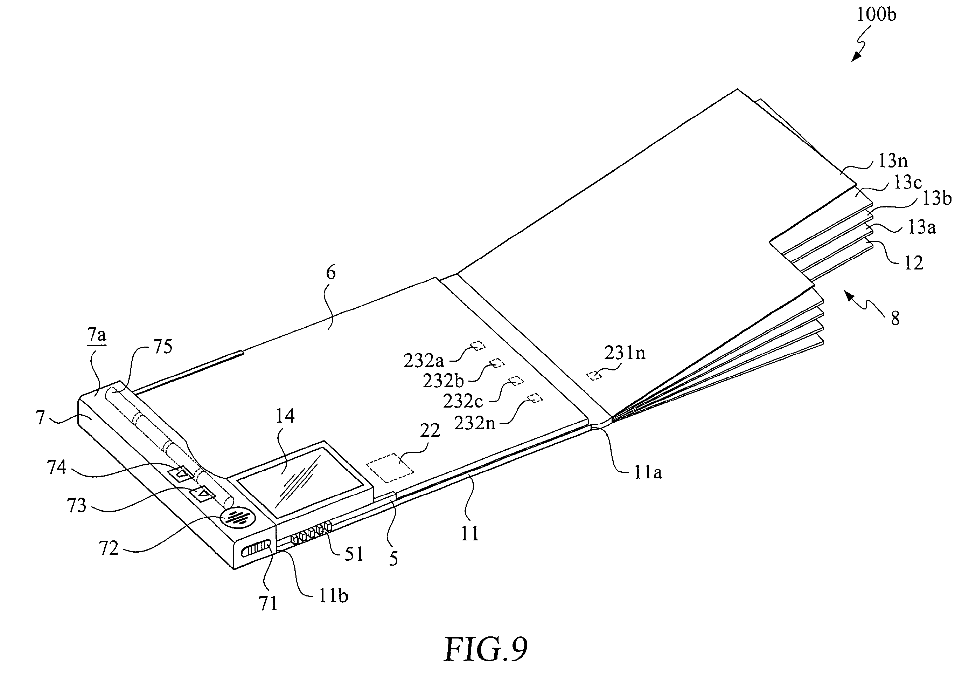

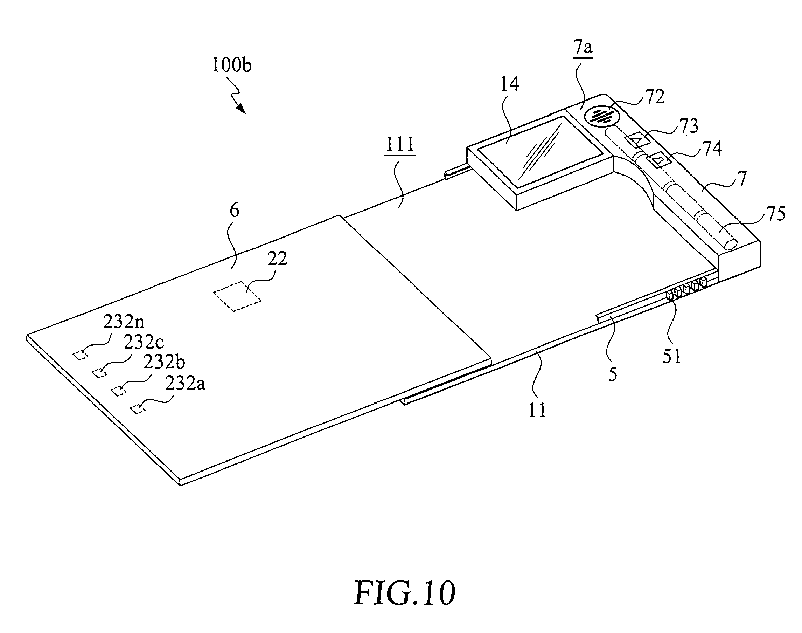

Figs. 9 is a perspective view of an electronic book with multimedia play function according to a third embodiment of the present invention with the electronic book in an opened state, and Fig. 10 shows that a removable base is separated from a back cover of the electronic book of Fig. 9. The third embodiment is different from the first and the second embodiment in that the electronic book 100b includes a pair of slide channels 5, a removable base 6, and an operating panel 7.

The slide channels 5 are located on the upper side 111 of the back cover 11 along upper and lower edges thereof to extend from and in perpendicular to the operating panel 7. The slide channels 5 are provided at predetermined positions with a pair of locks 51. The removable base 6 may be slid and inserted into the slide channels 5 to locate on the upper side 111 of the back cover 11. The removable base 6 has a built-in AV data memory 22 for storing a plurality of AV data thereon. When the reader wants to replace the AV data, simply release the locks 51 to push out the removable base 6 from the back cover 11 and insert another removable base 6 into the slide channels 5. Therefore, the design of removable base 6 allows a reader to watch rich and diversified AV data.

The back cover 11 of the electronic book 100b includes an inner connecting edge 11 a connected to the front cover 12 and the movable leaves 13a, 13b, 13c..., 13n, and an outer free edge 11b connected to the operating panel 7.

The operating panel 7 is provided at a predetermined position with a power switch 71, and has a top 7a provided with a speaker 72, an image play key 73, and a sound play key 74. The operating panel 7 defines an inner space for mounting a plurality of batteries 75 therein.

A display 14 is extended from a predetermined position on one side of the operating panel 7 that is connected to the outer free edge 11b of the back cover 11, so that the display 14 is extended in a direction parallel to the back cover 11 and located on a top of the removable base 6, which is inserted in the slide channels 5. All of the movable leaves 13a, 13b, 13c..., 13n and the front cover 12 are provided with a window 8 at a position corresponding to the display 14. Whereby when the reader watches any one of the movable leaves 13a, 13b, 13c..., 13n and the front cover 12, the display 14 can always be exposed to an open space to show corresponding AV data.

With the display 14, the electronic books 100, 100a, 100b may interact with the reader and are therefore useful in a wide range of books to meet different requirements. The display 14 may be the currently widely adopted liquid crystal display (LCD), or the touch display panel that combines an LCD and a touch panel.

The present invention has been described with some preferred embodiments thereof and it is understood that many changes and modifications in the described embodiments can be carried out without departing from the scope and the spirit of the invention that is intended to be limited only by the appended claims.

## Claims

1. An electronic book (100, 100a, 100b) with multimedia play function, comprising a main body (1) and an AV play unit (2), **characterized in that**;
the main body (1) comprises:
a back cover (11) located at a bottom of the main body (1) and having an upper side (111);
a front cover (12) located at a top of the main body (1);
a display (14) provided on the upper side (111) of the back cover (11) at a predetermined position thereof; and
a plurality of movable leaves (13a, 13b, 13c..., 13n) located between the back cover (11) and the front cover (12); and
the AV play unit (2) comprises:
a microprocessor (21);
a built-in AV data memory (22) connected to the microprocessor (21) for storing a plurality of AV data (22a, 22b, 22c..., 22n) thereon;
a display interface (141) connected to the display (14) for playing image data in the stored AV data (22a, 22b, 22c..., 22n);
a sound interface (161a) connected to a speaker (161) for playing sound data in the stored AV data (22a, 22b, 22c..., 22n); and
a leaf detecting unit (23) connected to the microprocessor (21) for detecting each individual one of the movable leaves (13a, 13b, 13c..., 13n).

2. The electronic book (100, 100a, 100b) with multimedia play function as claimed in claim 1, **characterized in that** the back cover (11) is provided on the upper side (111) with a base board (16), and the display (14) is located on the base board (16).

3. The electronic book (100, 100a, 100b) with multimedia play function as claimed in claim 2, **characterized in that** the speaker (161) is provided on the base board (16).

4. The electronic book (100, 100a, 100b) with multimedia play function as claimed in claim 2, **characterized in that** the base board (16) is provided with a USB socket (171).

5. The electronic book (100, 100a, 100b) with multimedia play function as claimed in claim 2, **characterized in that** the base board (16) is provided with a card slot (181).

6. The electronic book (100, 100a, 100b) with multimedia play function as claimed in claim 1, **characterized in that** the AV play unit (2) includes a touch panel (19) connected to the microprocessor (21) and located above the display (14).

7. The electronic book (100, 100a, 100b) with multimedia play function as claimed in claim 2, **characterized in that** the leaf detecting unit (23) includes a magnetic element (231a, 231b, 231c..., 231n) provided on each of the movable leaves (13a, 13b, 13c..., 13n) at a predetermined position.

8. The electronic book (100, 100a, 100b) with multimedia play function as claimed in claim 7, **characterized in that** the leaf detecting unit (23) includes a plurality of magnetic-sensing elements (232a, 232b, 232c..., 232n) located on the base board (16) to independently correspond to one of the magnetic elements (231a, 231b, 231c..., 231n) on the movable leaves (13a, 13b, 13c..., 13n).

9. The electronic book (100, 100a, 100b) with multimedia play function as claimed in claim 1, further comprising a pair of slide channels (5), a removable base (6), and an operating panel (7); **characterized in that** the slide channels (5) are located on the upper side (111) of the back cover (11) along two opposite edges thereof, and provided at predetermined positions with a pair of locks (51); and the removable base (6) may be slid and inserted into the slide channels (5) to locate on the upper side (111) of the back cover (11).

10. The electronic book (100, 100a, 100b) with multimedia play function as claimed in claim 9, **characterized in that** the operating panel (7) is provided at a predetermined position with a power switch (71), and on a top (7a) with an image play key (73) and a sound play key (74); and the operating panel (7) defining an internal space for receiving a plurality of batteries (75) therein.

11. The electronic book (100, 100a, 100b) with multimedia play function as claimed in claim 1, **characterized in that** each of the movable leaves (13a, 13b, 13c..., 13n) is provided with a window (15a, 15b, 15c..., 15n, 8) to correspond to the display (14).

12. The electronic book (100, 100a, 100b) with multimedia play function as claimed in claim 1, **characterized in that** the front cover (12) is provided with a window (15, 8) to correspond to the display (14).

13. An electronic book (100, 100a, 100b) with display, comprising a main body (1) having a back cover (11) that is located at a bottom of the main body (1) and has an upper side (111), a front cover (12) that is located at a top of the main body (1), and a plurality of movable leaves (13a, 13b, 13c..., 13n) located between the back and the front cover (12); the electronic book being **characterized in that** the back cover (11) is provided at a predetermined position on the upper side (111) with a display (14), and each of the movable leaves (13a, 13b, 13c..., 13n) is provided with a window (15a, 15b, 15c..., 15n, 8) corresponding to the display (14).

14. The electronic book (100, 100a, 100b) with display as claimed in claim 13, **characterized in that** the movable leaves (13a, 13b, 13c..., 13n) are provided at a predetermined position with at least one magnetic device (231a, 231b, 231c..., 231).

15. The electronic book (100, 100a, 100b) with display as claimed in claim 13, **characterized in that** the display (14) is mounted on a base board (16), and the base board (16) is located on the upper side (111) of the back cover (11).

16. The electronic book (100, 100a, 100b) with display as claimed in claim 15, **characterized in that** the base board (16) is provided at a predetermined position with a speaker (161, 72).

17. The electronic book (100, 100a, 100b) with display as claimed in claim 13, further comprising a pair of slide channels (5), a removable base (6), and an operating panel (7); **characterized in that** the slide channels (5) are located on the upper side (111) of the back cover (11) along two opposite edges thereof, and provided at predetermined positions with a pair of locking devices (51); and the removable base (6) may be slid and inserted into the slide channels (5) to locate on the upper side (111) of the back cover (11).

18. The electronic book (100, 100a, 100b) with display as claimed in claim 17, **characterized in that** the operating panel (7) is provided at a predetermined position with a power switch (71), and on a top (7a) with an image play key (73) and a sound play key (74); and the operating panel (7) defining an internal space for receiving a plurality of batteries (75) therein.

19. The electronic book (100, 100a, 100b) with display as claimed in claim 13, **characterized in that** the front cover (12) is provided with a window (15, 8) corresponding to the display (14).
